# EUROPEAN PATENT APPLICATION

(11) **EP 3 511 481 A1**
(43) Date of publication of application: **17.07.2019**
(21) Application number: 19020021.2
(22) Date of filing: 15.01.2019
(51) Int. Cl.: E04F 13/08, E04F 13/14, B32B 15/20, B32B 3/12, E04F 13/12, E04C 2/36

(54) **SYSTEM AND METHOD FOR COVERING A WALL**

(30) Priority: 16.01.2018 BE 201800009
(71) Applicant: AMFIN bvba, 9800 Zeveren (BE)
(72) Inventor: Franky, Amant, 9800 Zeveren (BE)
(74) Representative: Theunis, Patrick

(57) **Abstract**

The invention relates to a system for anchoring a panel against a wall (1). The system comprises panels, comprising a cladding (3) affixed in or to an aluminum plate (4) with a honeycomb structure, and stainless-steel connecting elements (6), suitable for being anchored in the wall (1) and comprising support means (7) for the panel. The plate (4) comprise inert inserts (5) comprising suitable openings for the supporting means (7) of the connecting elements (6).

The invention also relates to a method for producing a wall, using the system of the invention; the invention also relates to a wall manufactured according to said method.

## Description

### Field of the invention:

The present invention relates to a system and a method for covering or cladding a wall, more in particular an outer wall, by means of the placement or anchoring of a wall panel or a multitude of wall panels to a wall.

More specifically, the invention relates to a system and a method whereby wall panels comprising natural stone, embraced or affixed to an aluminum plate, are placed against a (an outer) wall by means of an inert intermediate component and stainless anchorages.

### Background of the invention

It is known that according to the present state of the art (outer) walls may be covered or cladded by materials made up of natural stone. The minimal thickness of the natural stone panels that are used for such application amount to 30 mm at the least; more often panels with a thickness of 40 mm are used. The corresponding weight of such panels then amounts to 88 kg/m2 on average (in case panels with a thickness of 30 mm are used) up to 110 kg/m2 (in case panels with a thickness of 40 mm are used).

The maximum weight that can be handled by a person skilled in the art of covering (outer) walls under practical (outdoor) circumstances, amounts to 80 kg per panel.

This implies that the maximum surface per panel amounts to 0.9 m2 when panels with a thickness of 30 mm are used, or 0.7 m2 for panels with a thickness of 40 mm.

The disadvantage hereof is that architects and users in most cases prefer to have at least as possible seams or joints in the wall.

Aesthetic considerations, on the basis whereof a minimal number of seams in a given outer wall are desired, lead to commercial requests for larger and larger panels.

However, also from a technical point of view, a minimal number of seams is desirable as in or around the seams contaminations or pollutions often arise. These in turn may lead to issues affecting the stability of the wall, and difficulties for cleaning and maintaining the wall.

A possible method for placing panels made up by natural stone materials against a wall, comprises placing the natural stone materials in aluminum rails or profiles and directly anchoring or affixing such aluminum rails or profiles against the wall.

This method however is a quite expensive solution, as well from the point of view of the materials used as from the point of view of the time and effort required for such placement or construction.

On top hereof, the strength of the supporting- or anchoring system made from aluminum is quite limited. It's carrying or loading capacity likewise is also limited and this in turn implies that such anchoring systems in practice can only by applied within a limited distance to the wall and its concrete or brick structure. This in turn implies that such an anchoring technique can only be applied in geographic areas where the insulation of the walls is carried out at the inner side of the wall. However, in quite a number of geographic areas, including for example the Benelux countries and Germany, for various reasons, the insulation is being placed at the outer side of the wall. In the latter case, used is being made of insulation packages of up to 20 or 30 cm thickness; this in turn implies that cantilevers of 25 up to 35 cm are necessary.

The latter dimensions cannot be realized when use is made of aluminum anchorage systems: the relative weakness of the materials prohibits the realization of cantilevers with such dimensions.

On the basis of the above considerations, wall panels made of or comprising natural stone materials are usually anchored against an (outer) wall by means of anchorage systems made up of stainless-steel materials, for instance of the type INOX AISI 306 or 314.

The company Halfen GmbH, Germany, supplies appropriate anchors or moorings made in stainless steel, as set forth further in the present application.

However, as set forth supra, in between the wall panels made in natural stone and the wall, insulation materials should be positioned, at least in the Benelux countries and Germany. The increasing demands in terms of insulation result in a requirement to position insulation materials with ever increasing thickness. As a consequence thereof, the cantilever of the wall panels, this means the distance between the outer side of the (outer) wall and the side of the wall panel directed to said outer wall, amounts to around 30 cm.

For such distance of the cantilever, the maximum load capacity of the anchorage systems amounts to approximately 80 kg. Higher amounts cannot be held for reasons of safety.

Also for this reason, the general request or demand to use wall panels as large as possible for coverage of an (outer) wall, cannot or can only partially be met. Even in case stainless steel anchorage components are used, the maximum size of wall panels is necessarily limited in view of both the above grounds.

In special applications such as for example in ships and constructions where weight is of the utmost importance, for example in air planes, plates comprising or consisting of natural stones are often limited to thicknesses of 5 up to 10 mm. Such panels however are quite weak and as a result need to be reinforced for practical use. To that end honeycomb like structures can be used, wherein or whereupon thin cladding or paneling panels made from natural stone can be used.

By the corresponding reduction of the weight, the possibility arises to use quite large wall panels or plates. In case of use of a natural stone, the thickness whereof has been limited to 5 mm, the weight as compared to a natural stone panel of 20 mm, is reduced by 75 %, and as compared to a natural stone panel of 30 mm, is reduced by 85 %. A reduction of the thickness of the natural stone of 2 cm to for example 5 mm, results in absolute terms to a reduction in weight from 55 kg/m2 to 18.5 kg/m2.

However, even in the case of use of such thin natural stones in a honeycomb aluminum structure, the limitation that in view of the inherent weakness of the aluminum material such structures should be positioned directly to the outer wall remains. In such a case, as set forth supra, the placement of outer insulation materials is not possible.

The company Stonevic ®, B-15A1, Tianghy Building, 148, Binglang Xili, Xiamen China, under the commercial name "Thintech SAH Panel", supplies panels with a thickness of for example 5 mm of stone, with a backing plate structure of a composite carrier of 15-20 mm with an aluminum honeycomb structure. The "Thintech SAH Panel Installation System" describes a system to position such panels against a wall. The cantilever, being the distance between the wall panels and the wall itself, remains in all of these applications quite limited.

The US patent US 3,266,209, published on August 16, 1966, by The Georgia Marble Company, Atlanta, USA, describes also a method for placing wall panels against a wall.

Also, in the patents, resp. patent applications such as US 2015/128518 A1 published on May 14, 2015, US 2012/198788 A1 published on August 9, 2012, WO 92/13153 A1 published on August 6, 1992, and WO 2008/156355 A1 published on December 24, 2008, systems have been described for covering outer walls.

Combining the above described stainless steel and aluminum structures is not quite obvious in view of the inherent incompatibility of both systems: on each point of contact between steel and aluminum a galvanic cell is present, resulting in a quick decrease in strength and stability caused by corrosion.

In view of the above, there remains a need for a system and a method for the covering of walls, whereby the abovementioned disadvantages, problems and limitations do not or at least minimally arise.

### Summary of the invention:

The aim of the present invention is to remedy the above and other disadvantages by offering a solution, namely by offering a system and a method for positioning panels against a wall.

More in particular the invention relates to a system for attaching, anchoring or fixing of a wall panel (or a multitude of wall panels) to a wall (1), whereby this system comprises the following elements, resp. means:
- a panel or some panels, such pane(s) comprising a coverage or cladding (3) affixed in or to an aluminum plate (4) with a honeycomb, and
- stainless steel connecting elements (6), suitable for being anchored in the wall (1) and comprising support means (7) for the panel.

The characteristic feature of the system according to the invention resides in the fact that the plate (4) comprise inserts (5) made of an inert material, comprising suitable openings for the supporting means (7) of the connecting elements (6).

More in particular, the invention comprises the system, the method and the wall as set forth in the appended claims.

### Brief description of the drawings

The foregoing and other objects, features, and advantages of the invention will be apparent from the following more particular description of a preferential form of an embodiment of the invention, as illustrated in the accompanying drawings, given as a non-restrictive example.

It will be appreciated that for simplicity and clarity of illustration, elements shown in the drawings/figures have not necessarily been drawn to scale, nor are these elements necessarily to scale relative to each other. For example, the dimensions of some of the elements may be exaggerated relative to other elements for clarity. Further, where considered appropriate, reference numerals may be repeated among the figures to indicate corresponding or analogous elements. So, in the drawings, the same reference numerals may identify the same elements of structure in each of the several figures where appropriate.

In the figures, the thickness of certain lines, layers, components, elements or features may be exaggerated for clarity. Broken lines illustrate optional features or operations unless specified otherwise.
Figures 1 & 2 is a schematic illustration in cross-section of the anchoring system according to the invention;
Figures 3 & 4 show a side/front view of a wall panel according to the invention;
Figure 5 shows a top view of a wall panel, anchored according to the invention;
Figure 6 also shows a top view of a wall panel according to the invention.

In all of these figures the reference signs set forth hereinafter indicate the following components:
- 1 denotes the wall to which the system according to the invention needs to be anchored;
- 2 denotes the space in between the wall 1 and the wall panel 4 as anchored;
- 3 denotes a coverage or cladding of a wall panel;
- 4 denotes the plate of the wall panel to be anchored, resp. that have been anchored;
- 5 denotes an insert of a wall plate 4;
- 6 denotes a connection element between the wall 1 and a wall panel;
- 7 denotes a support means of a connection element 6.

### Description of the invention

As set forth supra, the invention comprises the following aspects:
- a system for the anchoring of a panel against a wall (1);
- a method that makes use of this system, and
- a wall, covered according to the method of the invention.

The system according to the invention thereby comprises the following elements, resp. means:
- a panel comprising a coverage or cladding (3) affixed in or to an aluminum plate (4) with a honeycomb structure, and
- stainless steel connecting elements (6), suitable for being anchored in the wall (1) and comprising support means (7) for the panel.

(Stainless steel elements in the context of the present invention should be understood as elements made from stainless steel, the composition whereof or the specific treatment whereof is directed to avoid the occurrence of rust. These materials are also denoted as 'inox' or 'stainless steel'.)

The stainless-steel connecting elements for use in the system according to the invention are made on the basis of materials known to the person skilled in the art.

Depending for example of the required size of the cantilever and the size of the panels, an appropriate selection can be made from the materials available on the present market.

A possible supplier of such connecting elements is the company Halfen GmbH & Co, Kommanditgesellschaft, Langenfeld-Richrath, Germany. Under the trade name 'Halfen body anker', this company markets a range of supporting anchors, comprising an appropriate combination of nuts, screws, lock nuts, cantilever racks, slotted holes, raster-plates, C-clamps and supporting constructions.

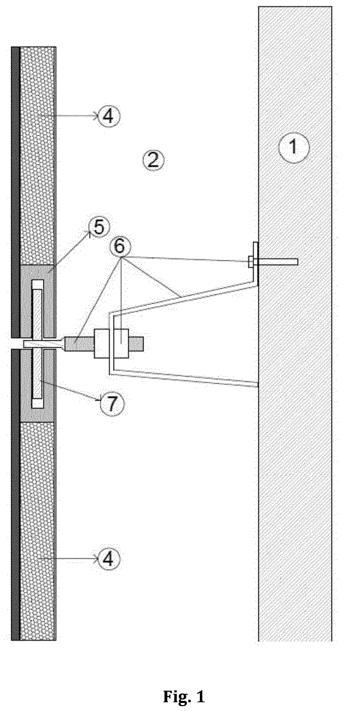

For purposes of illustration, figure 1 shows as suitable combination of the above elements, whereby a suitable support for the wall panel to be anchored can be realized.

More in particular the Halfen ® HRM/HRC body anchors, the Halfen ® BA Body anchors, the Halfen ® DT body anchors, and/or the Halfen ® DH body anchors can be used for the purposes of realizing the system of the present invention.

In the European patent application published under nr. EP 3 081 707 A1 of Halfen GmbH such supporting anchors have been described.

The characteristic feature of the system of the present invention resides in the fact that the plate (4) of the panel comprise inserts made of an inert material (5), comprising suitable openings for the supporting means (7) of the connecting elements (6).

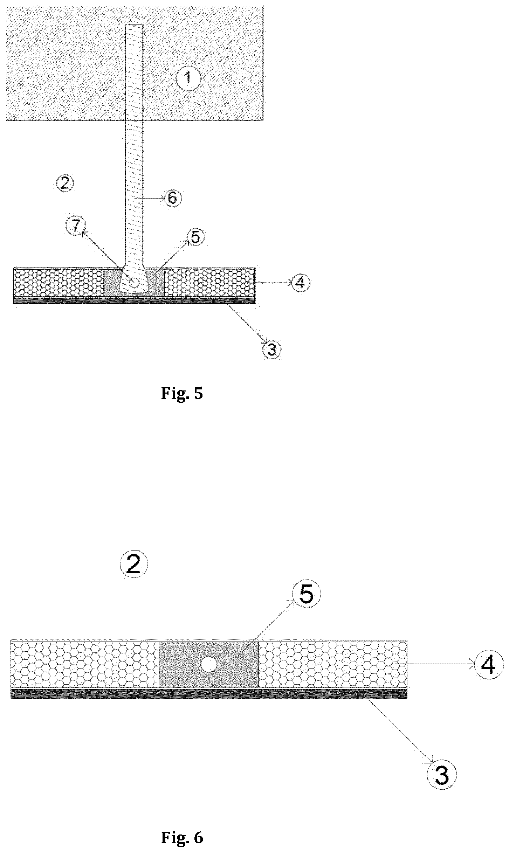

According to the invention the aluminum plate for the panel comprises a honeycomb structure. This structure is shown in the figures 5 and 6. Figure 6 for example shows a top view of a wall panel according to the invention, comprising such honeycomb structure as supporting element, the coverage (3) affixed thereto, as well as the insert (5) comprising the central opening for receipt of the supporting elements (7). Such honeycomb structure is a structure known as such for the person skilled in the art. In this structure an area has been taken out, for example by cutting or milling or by some other known means, and an inert material as described further, is inserted or placed in the void or opening. This inert material may have a square or rectangular shape and preferably it has the same thickness as the honeycomb structure. This material is anchored to the honeycomb structure in a mechanical manner, or it is glued to this structure. To that end use can be made for example of the single-component glue available on the market under the trade name TEC 7 ® of the company Novatech International, Industrielaan 5B, Olen, Belgium or under the trade name Soudal Fix-All of the company Soudal N.V., Everdongenlaanl8-20, Turnhout, Belgium. A typical size of such insert is for example 40 mm x 40 mm x 18 mm thick.

In or to such plate structure the thin coverage or cladding made up of or comprising natural stone is affixed.

According to a preferred embodiment, the aluminum honeycomb-structured plate may comprise an aluminum plain plate at the side directed towards the wall (1), and a coating of fiber-reinforced material at the opposite side, to which the natural stone plate is glued. In between both sides, the honeycomb structure is present, comprising a thickness varying between 10 and 35 mm, preferably 15 to 30 mm, more preferably around 20 mm.

In a further preferred embodiment of the invention, the support means (7) are pin-shaped and fit into corresponding cylinder-shaped openings of the inserts (5). These (cylinder-shaped) openings form a void wherein the (pin-shaped) support means can be 'anchored' or affixed.

As the plate structure of the wall panel comprises such inserts that are made of inert material, any risk of contamination or metal corrosion between the inox or stainless-steel supporting means (7) and connecting elements (6) and the aluminum support plate (4) for the wall panel(s) is excluded.

In a further preferred embodiment according to the invention, after positioning the supporting means (7) in the openings of the inserts of the wall panels, the supporting means are connected to the inserts by means of gluing. To this end, one of the glues as described supra can be used, or an alternative equivalent connecting means or glue.

In a further preferred embodiment, the connecting elements (6) of the system according to the invention are so conceived that the support means (7) are positioned at a distance between 10 and 35 cm from the wall (1), more preferably 15 to 35 cm, still more preferably from 20 to 35 cm. The advantage hereof is that in the spacing between the wall (1) and the wall panels, thermal insulation materials can be positioned.

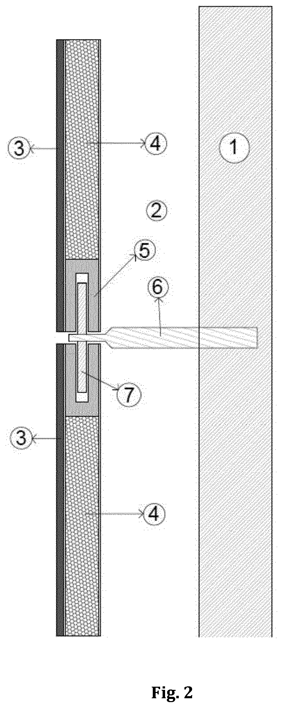

In such a way the wall can be thermally insulated at its outer side, in conformity with the traditional way of working applied in for example the Benelux countries and/or Germany. This way of operation has been illustrated in figure 1 or 2. Both figures show a manner of execution according to the invention, wherein the panels are anchored to the wall by means of the connecting means (6) and the support means (7).

In a further preferred embodiment of the invention, the inserts have been manufactured from an inert material, such as natural stone, but still more preferably a hard plastic.

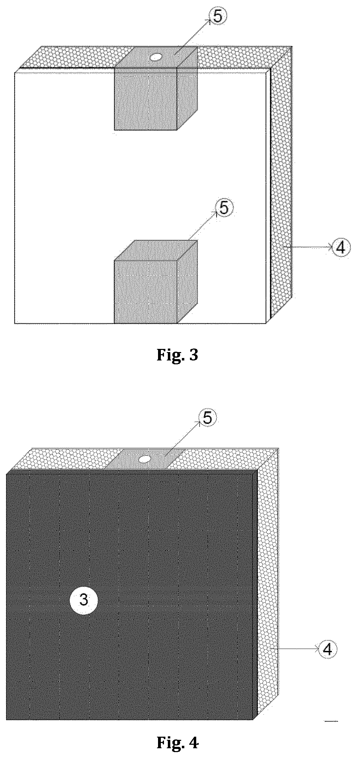

According to a still further preferred embodiment this hard plastic may be chosen from one of the following materials: carbon or fiberglass reinforced polyamide. A suitable material for manufacture of such inserts is for example the fiber glass reinforced polyamide material available on the market under the trade name Ertalon ®. Ertalon is a registered trade mark of the Quadrant Group of Companies. It is a typical engineering plastic. The product Ertalon 66-GF30, available from the PlastiService Group (www.plastiservice.com) is a polyamide material, reinforced with 30 % of fiber glass; it is characterized by an excellent wear resistance, a high mechanical strength, stiffness and dimensional stability. It can also be used by relatively high temperatures. The presence of these properties implies that this material is an excellent choice for manufacturing the inserts of the wall panels of the system of the present invention. The position of these inserts is shown in a manner of execution as shown in Figure 3. The wall panels can either be affixed or anchored to the wall in two possible ways:
- in a first manner of operation, the inserts (5) are positioned underneath- and on top of the wall panel to be affixed (as shown in Fig. 3 and 1);
- in a second manner of operation, the inserts (5) are positioned on either side of the wall panels to be affixed.

The invention also relates to a method for affixing or anchoring the wall panel to the wall (1) by means of the system as described above.

The method then comprises the following steps:
- anchoring to the wall the stainless-steel connecting elements (6);
- affixing the wall panel to the connecting elements (6) by inserting the support means (7) of the connecting elements in the corresponding openings of the inserts (5) of the wall panels (4).

As described above, the wall panels can be affixed to the wall as the support elements (7):
- either are inserted on top of and underneath the inserts (5) of the panels,
- or at the left- and right side of the inserts (5) of the panels.

Finally, the invention also relates to a wall covered according to the method as described above.

The big advantage of the system, resp. the method according to the invention is the fact that a wall can be covered with wall panels with a size up to 3 m2, even up to 4 m2 per individual wall panel, in the manner according to the invention and that such method of covering or cladding appears to be as well efficient as safe, and without any risk for the occurrence of rust.

Given the reduction in weight obtained by the system, resp. the method according to the invention, the positioning, placement or anchoring of this type of wall panel can be accomplished by only two persons. In contrast thereto, in the case of the placement of the more traditional wall panels, given the weight and resulting difficult handling of the panels, always three persons are required. Given the reduction in weight of around 18.5 kg/m2, a panel with a size of 3 m2, used in the system according to the invention, only weighs 50 kg.

According to the system and the method according to the invention, an unexpected beneficial effect is obtained, on the one hand in terms of aesthetic considerations: by the use of the present invention, a wall can be completely covered with a minimal number of visual joints or seams.

But on the other hand, there is also a considerably gain in terms of placing the panels, as well expressed in terms of time required for the placement, as in terms or required manpower. Given the reduction in weight per square meter of covered wall, per square meter of covered wall there is also a more limited number of anchoring points required. This aspect also considerably reduces the cost of affixing the wall panels to the wall.

On top of the abovementioned advantages, the system offers the possibility to position thermal insulation materials in the spacing between the outer side of the wall and the wall panels.

To this end, it suffices to conceive the connecting elements such that the supporting means for the wall panels can be positioned at a sufficient distance from the wall. In practical terms, this means that a distance of 30 cm or higher (up to 50 cm) can be held.

Finally, according to the system and the method of the present invention, not only wall panels covered with natural stone materials can be affixed to a wall. Also, ceramic materials of up to e.g. 3 mm thickness, small mosaic panels or other materials can be used in a similar manner.

A last, an unexpected advantage of the system and the method according to the invention is that a substantive part of the total work can be performed preceding the actual fixation of the wall panels to the wall, namely in the workhouses or premises of the builder or contractor. In particular the complete manufacture of the wall panels to be placed and the connecting elements can take place in a covered workplace, e.g. in het workhouse of the builder or contractor. At the location of the wall to be covered, only the operation of anchoring the connecting elements to the wall and the positioning and anchoring of the wall panels on the connecting elements can then be performed on site.

## Claims

1. System for anchoring a wall panel to a wall (1), the system comprising:
- a panel comprising a cladding (3) affixed in or to an aluminum plate (4) with a honeycomb structure, and
- stainless steel connecting elements (6), suitable for being anchored in the wall (1) and comprising support means (7) for the panel,
**characterized in that**
the plate (4) comprises inert inserts (5) comprising suitable openings for the support means (7) of the connecting elements (6).

2. System according to claim 1, further **characterized in that** the support means are pin-shaped, fitting into cylinder-shaped openings in the inserts (5).

3. System according to claim 1 or 2, further **characterized in that** the inserts (5) are made from hard plastic.

4. System according to claim 3, further **characterized in that** the hard plastic has been selected from one of the following materials: carbon or fiber reinforced polyamide.

5. System according to any one of the preceding claims, further **characterized in that** the support means (7) of the connecting elements (6) are positioned between 10 and 35 cm, preferably between 10 and 30 cm, more preferably between 10 and 20 cm as from the wall (1).

6. Method for affixing a wall panel, comprising a cladding (3) affixed in or to an aluminum plate (4) with a honeycomb structure, to a wall (1) by means of the system according to one of the preceding claims, comprising the following steps:
- anchoring in the wall the stainless steel connecting elements (6),
- affixing the panel to the connecting elements (6) by inserting the support means (7) of the connecting elements in the corresponding openings of the inserts (5) of the plate (4) of the panel.

7. Method according to claim 6, **characterized in that** thermal insulation material is placed between the panel and the wall (1).

8. Wall covered by any of the methods of claims 6 or 7.
